# EUROPÄISCHE PATENTSCHRIFT

(11) **EP 0 894 681 B1**
(45) Veröffentlichungstag und Bekanntmachung des Hinweises auf die Patenterteilung: **03.09.2003**
(21) Anmeldenummer: 98113788.8
(22) Anmeldetag: 23.07.1998
(51) Int. Cl.: B60R 22/34, B65H 75/28

(54) **Gurtbandeinhängung**
Webbing attachment
Accrochage de sangle

(30) Priorität: 01.08.1997 DE 19733343
(43) Veröffentlichungstag der Anmeldung: 03.02.1999
(73) Patentinhaber: TAKATA-PETRI (Ulm) GmbH, 89081 Ulm (DE)
(72) Erfinder: Kempfle, Thomas, 89346 Bibertal (DE); Wengert, Andreas, 73557 Mutlangen (DE); Bannert, Georg, 88444 Ummendorf (DE); Fleischmann, Robert, 89073 Ulm (DE); Kopetzky, Robert, 89173 Lonsee (DE)
(74) Vertreter: Maikowski, Michael, Dipl.-Ing. Dr.

(56) Entgegenhaltungen:
- DE-U- 29 505 268
- DE-U- 29 605 115
- DE-U- 29 613 044
- DE-U- 29 703 665
- FR-A- 2 331 942

## Beschreibung

Die vorliegende Erfindung betrifft eine Anordnung zur Befestigung eines Gurtbandes an einer Spule eines Sicherheitsgurtaufrollers, die eine Welle, eine koaxial zur Welle angeordnete Spule und ein an der Spule befestigtes Gurtband umfasst, das an seinem Ende eine geschlossene Schlaufe bildet.

Eine derartige Gurtbandeinhängung ist aus der US 4,385,736 bekannt. Bei dieser bekannten Anordnung ist das Gurtband mit seiner Schlaufe über die Welle gesteckt, wobei auf diese Anordnung ein Klemmglied aufgebracht ist, welches die Schlaufe gegen die Welle presst. Das Gurtband tritt durch einen Schlitz in dem Klemmglied und durch einen Schlitz in der Spule nach außen aus und ist auf die Spule gewickelt.

Eine weitere Gurtbandanhängung ist aus der US 4,119,281 bekannt. Bei dieser Gurtbandaufhängung ist keine separate Welle vorgesehen. Zum Befestigen des Gurtbandes an der Spule dienen wiederum Klemmelemente, die das Gurtband gegenüber der Spule festklemmen.

Schließlich ist aus der EP 0 620 141 B1 eine Gurtbandbefestigung bekannt, bei der das Gurtband durch Flächenpressung an der Spule gehalten wird.

Aus der DE-U-296 05 115 und der DE-U-297 03 665 sind Gurtbandeinhängungen gemäß dem Oberbegriff von Anspruch 1 bekannt.

Es ist das der vorliegenden Erfindung zugrundeliegende Problem (Aufgabe), eine Gurtbandaufhängung der eingangs genannten Art zu schaffen, die das Gurtband sicher hält, kostengünstig herzustellen ist und eine einfache Montage ermöglicht.

Die Lösung dieser Aufgabe erfolgt durch die Merkmale des Anspruchs 1 und insbesondere dadurch, dass in der Schlaufe ein quer zur Gurtbandrichtung verlaufender Sicherungsstift vorgesehen ist, der jedoch nicht durch die Welle gebildet ist. Gegenüber den aus dem Stand der Technik bekannten Konstruktionen ist erfindungsgemäß ein zusätzlicher Sicherungsstift vorgesehen, der alleine oder zusammen mit der Welle ein unerwünschtes Abziehen des Gurtbandes sowie ein unerwünschtes Leerdrehen des Gurtbandes gegenüber der Spule verhindert. Die erfindungsgemäße Anordnung ist kostengünstig herstellbar, da der Sicherungsstift als geometrisch einfaches Bauteil gefertigt werden kann. Gleichzeitig ist eine kostengünstige Montage möglich, da zur Befestigung des Gurtbandes keine Pressvorgänge oder dergleichen vorgenommen werden müssen.

Vorteilhafte Ausführungsformen der Erfindung sind in der Beschreibung, den Unteransprüchen und den Figuren beschrieben.

Insbesondere ist der Sicherungsstift einstückig mit der Spule verbunden, wodurch ein weiterer Montageschritt entfallen kann. In diesem Fall ist es vorteilhaft, dass der Sicherungsstift durch zwei beabstandete Schlitze in der Spule gebildet ist, da sich die Schlaufe dann auf den Sicherungsstift seitlich aufstecken lässt, so dass das Gurtband im Bereich der Spule durch die beiden Schlitze verläuft.

Nach der Erfindung befindet sich innerhalb der Schlaufe nicht nur der erfindungsgemäß vorgesehene Sicherungsstift sondern zusätzlich auch die Welle. Auch hier ist für eine doppelte Sicherheit gesorgt, da zwei Sicherungselemente vorgesehen sind, um das Gurtband an der Spule zu befestigen.

Bevorzugt ist das Gurtband und/oder die Schlaufe des Gurtbandes mit Spiel zwischen der Welle und der Spule angeordnet. Eine solche Ausführungsform ermöglicht eine leichte Montage, da das Gurtband bzw. die Schlaufe ohne weiteres zwischen Welle und Spule eingeführt werden kann, ohne dass es dabei zu einem Verkanten kommt, und ohne dass Pressvorgänge oder dergleichen erforderlich sind.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: einen Schnitt durch eine Gurtbandeinhängung, die keine erfindungsgemäße Lösung darstellt; und
- Fig. 2: einen Schnitt durch eine Ausführungsform einer Gurtbandeinhängung gemäß der Erfindung.

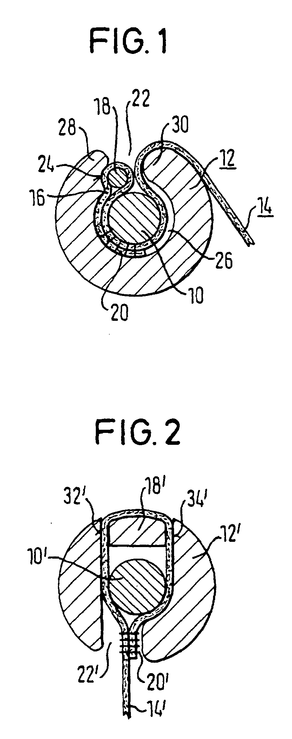

Die in Fig. 1 dargestellte nicht erfindungsgemäße, Anordnung zur Befestigung eines Gurtbandes 14 an einer Spule 12 eines Sicherheitsgurtaufrollers weist eine Welle 10 auf, die koaxial in der Spule 12 aufgenommen ist. An der Spule 12 ist das Gurtband 14 befestigt, das an seinem Ende eine geschlossene Schlaufe 16 bildet. Zu diesem Zweck ist das Gurtbandende auf sich selbst umgeklappt und mit einer Naht 20 vernäht.

Bei dem der in Fig. 1 gezeigten Beispiel ist in der Spule 12 eine axial verlaufende Aussparung 22 gebildet, die einen konkaven Abschnitt 24 aufweist, in welcher der Sicherungsstift 18 aufgenommen ist. Das Gurtband 14 ist durch die zum Außenumfang hin offene Aussparung 22 in das Innere der Spule 12 eingeführt und umschlingt die Welle 10 nahezu vollständig. Das Gurtband 14 tritt mit seiner Schlaufe 16 nach Umschlingen der Welle 10 in die Aussparungen 22 ein und ermöglicht somit, daß der Sicherungsstift 18 dort in das Innere der Schlaufe gesteckt wird.

Das Gurtband 14 bzw. die Schlaufe 16 ist in dem ringförmigen Zwischenraum zwischen der Welle 10 und dem Innenumfang der Spule 12 mit etwas Spiel aufgenommen, was die Montage begünstigt. Da die Randabschnitte 28, 30 der Spule, die in Richtung der Aussparung 22 weisen, abgerundet sind, ist eine sanfte Gurtbandführung gewährleistet. Zur Montage der in Fig. 1 dargestellten Anordnung wird das mit der Schlaufe 16 versehene Gurtband einmal auf sich umgeklappt und die dadurch entstehende (temporäre) Schlaufe wird auf die Welle 10 gesteckt. Nachdem der Sicherungsstift 18 in die Schlaufe 16 eingesteckt worden ist, kann das Gurtband 14 angezogen werden, wodurch der Sicherungsstift 18, der von der Schlaufe 16 umschlungen ist, in die Aussparung 20 hineingezogen wird, und in dem konkaven Abschnitt 24 anliegt. Die Breite der Aussparung 23 ist dabei so dimensioniert, daß der Sicherungsstift 18 bei diesem Vorgang aufgrund der Elastizität des Gurtbandes in Richtung seiner Dicke zwar in die Aussparung 22 hineingezogen werden kann, diese jedoch ohne äußere Krafteinwirkung nicht mehr verläßt.

Fig. 2 zeigt eine erste Ausführungsform der Erfindung, bei der eine Welle 10' koaxial innerhalb einer Spule 12' aufgenommen ist. Auch hier ist ein Gurtband 14' vorgesehen, das durch eine Naht 20' eine Schlaufe 16' bildet.

Bei dieser Ausführungsform ist ein Sicherungsstift 18' einstückig mit der Spule ausgebildet, indem der Außenumfang der Spule 12' mit zwei parallelen Schlitzen 32', 34' versehen ist. Im wesentlichen um 180° versetzt zu dem Sicherungsstift 18' ist im Außenumfang der Spule 10' eine Aussparung 22' vorgesehen, durch die das Gurtband 14' in das Innere der Spule eingeführt ist.

Bei der in Fig. 2 gezeigten Ausführungsform ist das Volumen der Schlaufe größer ausgebildet, als bei der Ausführungsform von Fig. 1, so daß es möglich ist, die Schlaufe 16' des Gurtbandes 14' sowohl über die Welle 10' wie auch über den einstückig mit der Spule 12' verbundenen Sicherungsstift 18' zu stecken. Somit befindet sich bei dieser Ausführungsform die Naht 20' des Gurtbandes nicht in einem Zwischenraum zwischen der Spule und der Welle sondern ist im Bereich der Aussparung 22'. Das Gurtband verläuft dabei von der Aussparung 22' durch einen zwischen Welle 10' und dem Inneren der Spule 12' gebildeten Zwischenraum, tritt durch den Schlitz 32' aus, umschlingt den Sicherungsstift 18' über einen Bereich von etwa 180°, wird anschließend durch den Schlitz 34' wieder in das Innere der Spule 12' geführt und tritt über einen weiteren Zwischenraum zwischen Welle 10' und der Spule 12' wieder in die Aussparung 22' ein. An dieser Stelle ist das Gurtende mit der Naht 20' versehen.

Auch bei dieser Ausführungsform befindet sich das Gurtband stets mit etwas Spiel zwischen der Welle 10' und dem Inneren der Spule 12'.

Wie aus den Fig. 1 und 2 hervorgeht, besitzt der Sicherungsstift 18 der Anordnung gemäß Fig. 1 eine Querschnittsfläche, die etwa 25% der Querschnittsfläche der Welle 10 beträgt. Demgegenüber weist die bei der in der Fig. 2 dargestellten Ausführungsform die Querschnittsfläche des Sicherungsstiftes 18' im wesentlichen die gleiche Größenordnung auf wie die Querschnittsfläche der Welle 10'.

Bei beiden Anordnungen dreht sich die Welle zusammen mit der Spule. Ebenso ist bei beiden Anordnungen die Schlaufe als geschlossene Schlaufe ausgebildet, d.h. das Gurtbandende ist umgeschlagen und vernäht oder anderweitig befestigt.

## Patentansprüche

1. Anordnung zur Befestigung eines Gurtbandes an einer Spule eines Sicherheitsgurtaufrollers, mit
- einer Welle (10, 10'),
- einer koaxial zur Welle (10, 10') angeordneten Spule (12, 12'), und
- einem an der Spule (12, 12') befestigten Gurtband (14, 14'), das an seinem Ende eine geschlossene Schlaufe (16, 16') bildet, wobei sich in der Schlaufe (16, 16') ein quer zur Gurtbandrichtung verlaufender Sicherungsstift (18, 18') befindet, der nicht durch die Welle (10, 10') gebildet ist;
**dadurch gekennzeichnet, dass**
der Sicherungsstift (18') einstückig mit der Spule verbunden und durch zwei beabstandete Schlitze (32', 34') in der Spule (12') gebildet ist;
dass sich die Welle (10') innerhalb der Schlaufe (16') befindet; und
dass in der Spule(10') ein Austrittsschlitz (22') für das Gurtband (14') vorgesehen ist, der um etwa 180° gegenüber dem Sicherungsstift (18') versetzt angeordnet ist.

2. Anordnung nach Anspruch 1,
**dadurch gekennzeichnet, dass**
das Gurtband (14, 14') und/oder die Schlaufe (16, 16') des Gurtbandes zumindest teilweise mit Spiel zwischen der Welle (10, 10') und der Spule (12, 12') angeordnet ist.

## Claims

1. Arrangement for fastening a belt strap to a reel of a seat belt retractor, having
- a shaft (10, 10'),
- a reel (12, 12') arranged coaxially with the shaft (10, 10'), and
- a belt strap (14, 14') which is fastened to the reel (12, 12') and forms a closed loop (16, 16') at its end, a securing pin (18, 18') which runs transversely to the direction of the belt strap and is not formed by the shaft (10, 10') being located in the loop (16, 16');
**characterized in that** the securing pin (18') is connected integrally to the reel and is formed by two spaced apart slots (32', 34') in the reel (12');
**in that** the shaft (10') is located within the loop (16'); and
**in that** an outlet slot (22') for the belt strap (14') is provided in the reel (12') and is arranged offset through approximately 180° with respect to the securing pin (18').

2. Arrangement according to Claim 1, **characterized in that** the belt strap (14, 14') and/or the loop (16, 16') of the belt strap is arranged at least partially with a clearance between the shaft (10, 10') and the reel (12, 12').

## Revendications

1. Dispositif pour la fixation d'une sangle sur une bobine d'un enrouleur de ceinture de sécurité, avec
- un arbre (10,10'),
- une bobine (12,12') disposée coaxialement par rapport à l'arbre (10,10'), et
- une sangle (14,14') fixée à la bobine (12,12'), et qui forme une boucle fermée (16,16') à son extrémité, tandis que dans la boucle (16,16') se trouve une tige de sûreté (18,18') s'étendant transversalement à la direction de la sangle et qui n'est pas formée par l'arbre (10,10');
**caractérisé en ce que**,
la tige de sûreté (18') est raccordée d'un seul tenant avec la bobine et est formée par deux fentes espacées (32', 34) dans la bobine (12');
**en ce que** l'arbre (10') se trouve à l'intérieur de la boucle (16'); et
**en ce qu'**une fente de sortie (22') est prévue dans la bobine (12') pour la sangle (14') et qui est agencée de façon décalée d'environ 180° par rapport à la tige de sûreté (18').

2. Dispositif selon la revendication 1, **caractérisé en ce que**, la sangle (14,14') et/ou la boucle (16,16') de la sangle est agencée au moins partiellement avec un jeu entre l'arbre (10,10') et la bobine (12,12').
